# EUROPEAN PATENT APPLICATION

(11) **EP 2 502 729 A1**
(43) Date of publication of application: **26.09.2012**
(21) Application number: 11275048.4
(22) Date of filing: 25.03.2011
(51) Int. Cl.: B29C 67/00, B22F 3/105

(54) **Additive layer manufacturing**

(71) Applicant: BAE Systems Plc, London SW1Y 5AD (GB)
(72) Inventor: The designation of the inventor has not yet been filed
(74) Representative: BAE SYSTEMS plc Group IP Department

(57) **Abstract**

An additive layer manufacturing system (100) and method are provided. The system includes a powder delivery system (104) providing at least one powder feed (114A) from a powder stock to a powder exit (112) adjacent a deposition point (110). The powder delivery system further comprises at least one valve system (116A) proximal to the powder exit for controlling the flow of the at least one powder feed at the deposition point.

## Description

The present invention relates to Additive Layer Manufacturing.

Additive Layer Manufacture (ALM) is used for repeated layering of desired material(s) in order to create structural components. The term "additive" is used to contrast conventional manufacturing processes such as milling or turning in which material from a solid layer or object is taken away or removed.

The material in an ALM process might be added to an existing structure in the form of cladding, or for the repair or addition of fixings. Alternatively, it may be the free form deposition of a material to form an independent structure. In blown powder ALM systems, powder is delivered from a powder stock by a delivery system. The powder feed is directed into the path of a laser beam, which heats the powder and melts it. Upon cooling a fully dense solid is produced. This process is repeated so as to provide the layered structure as desired.

ALM is a relatively mature process and there are a number of machines commercially available. However, all these machines use relatively simple powder delivery systems that have not changed for many years: the lasers are either continuous or pulsed and it is possible to alter the power or turn it on and off as required. During processing the powder forms a continuous stream and this introduces many difficulties and limitations to the process.

Embodiments of the present invention can address at least some of the problems discussed above. Embodiments can provide an additive layer manufacturing system with improved control over the supply of the powder feed.

According to one aspect of the present invention, there is provided an additive layer manufacturing system comprising a powder delivery system providing at least one powder feed from a powder stock to a powder exit adjacent to a deposition point; wherein the powder delivery system further comprises at least one valve system proximal to the powder exit for controlling the flow of the at least one powder feeds at the deposition point.

The system may further comprise a laser beam directed at the deposition point.

As the valve system is located close to the exit point of the powder, the effect of the valve system is instantaneous and sharp.

The powder delivery system may further comprise a nozzle, the nozzle comprising the at least one valve system. The valve system may be present adjacent to the tip of the nozzle. The laser beam can be directed at the deposition point through a passage in the nozzle. The nozzle may be at the tip of a deposition head. The laser and nozzle may be provided integrated into a deposition head.

A plurality of powder delivery systems may be provided. Each powder delivery system can comprise a valve system proximal to a powder exit for controlling the flow of powder feed at the deposition point. Each powder exit may be provided in the nozzle. Each powder feed can comprise a different material. The or each powder feed can comprise metals, ceramics, powders, fibres or mixtures thereof.

The valve system may selectively divert the powder feed away from the deposition point. The valve system may divert the powder feed back to the powder stock. Alternatively, the valve system may divert the powder feed into a separate container for recycling.

The valve system can comprise an inlet line, an outlet line and a bypass line, and a valve arranged to selectively connect the inlet line to the outlet line or bypass line.

According to a further aspect of the invention there is provided a method of preparing a layered structure, the method including:
using a powder delivery system to feed powder from at least one powder feed from a powder stock to a powder exit adjacent to a deposition point, and
using at least one valve system proximal to the powder exit for controlling flow of the at least one powder feed at the deposition point.

The method may include:
providing at least one powder delivery system, wherein the powder delivery system comprises at least one valve system proximal to the powder exit, and a laser;
directing the laser beam at a deposition point;
depositing powder from the powder exit onto the deposition point such that it is heated by the laser; and
selectively activating the at least one valve system so as to divert the flow of powder away from the powder exit.

The powder delivery system can comprise a plurality of valve systems. The method can further comprise selectively activating the at least one valve system to alternate or mix different materials.

The method may further comprise selectively activating the at least one valve system such that no powder exits at the deposition point while activating the laser to apply a heat treatment or laser process to material at the deposition point.

Alternatively or additionally, the method may comprise providing a fluid delivery system and, further comprising selectively activating the valve system such that no powder exits at the deposition point, while deactivating the laser and activating the fluid delivery system to provide thermal management (including forced cooling) of material at the deposition point.

According to a further aspect of the invention provides an additive layer manufacturing deposition head comprising at least one valve system substantially as herein described or for use in a method substantially as herein described. The Additive Layer Manufacturing deposition head may include an arrangement for receiving at least one powder feed from a powder stock and at least one valve system arranged, in use, proximal to a powder exit adjacent to a deposition point for controlling the flow of the at least one powder feed at the deposition point.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to the practitioners skilled in the art. Furthermore, it is contemplated that a particular feature described either individually or as part of an embodiment can be combined with other individually described features, or parts or other embodiments, even if the other features and embodiments make no mention of the particular feature. Thus, the invention extends to such specific combinations not already discussed.

The invention may be performed in various ways, and, by way of example only, an embodiment thereof will now be described, reference being made to the accompanying drawings in which:
Figures 1 to 4 are schematic cross-sectional diagrams of an additive layer manufacturing system according to an embodiment of the invention, and
Figure 5 is a schematic illustration of the layering of different materials using an additive layer manufacturing system according to an embodiment of the invention.

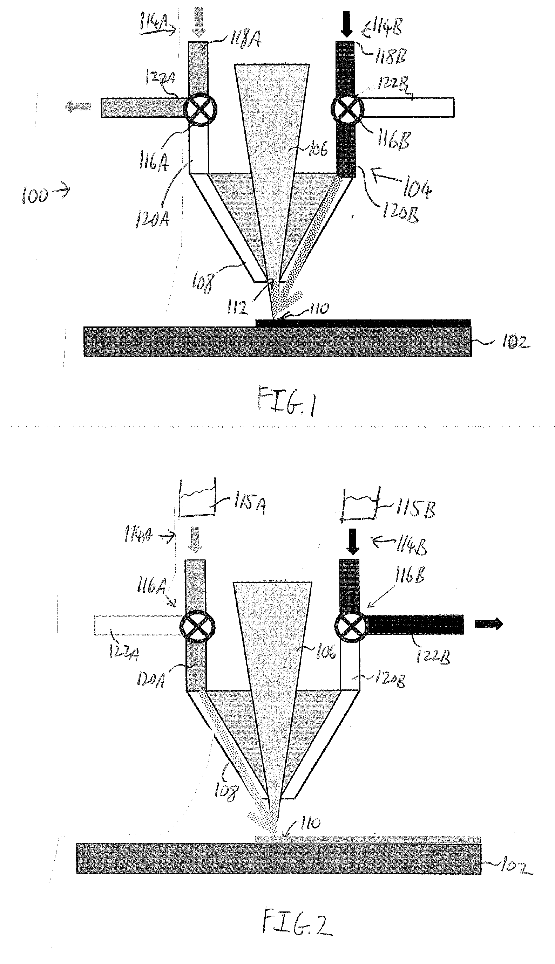

As seen in Figure 1, an example additive layer manufacturing system 100 for depositing material 101 onto a base plate 102 has a powder delivery system 104 and a laser beam 106 directed through a nozzle 108 at a deposition point 110. The powder delivery system further includes a powder exit 112 at the tip of the nozzle adjacent to the deposition point and is arranged, in use, to eject powder towards the deposition point. The nozzle may be provided on a deposition head (not shown) which is movable relative to the base plate.

The powder delivery system 104 provides two powder feeds 114A, 114B from two powder stocks (illustrated schematically at 115A, 115B in Figure 2) to the powder exit 112 of the nozzle 108 adjacent to the deposition point 110. The distance between the nozzle and the deposition point is typically 10-20 mm. The powder feed rates and powder stock may be controlled by a controller (not shown) for the powder feeder as in conventional ALM powder systems. The powder feeds may be of significant length, for example several metres or longer, in large manufacturing facilities.

The nozzle 108 is provided with a first valve system 116A and a second valve system 116B proximal to the powder exit 112 at the tip of the nozzle. An example distance/range from the valves to the tip of the nozzle is about 15 cm, although in other embodiments the distance can be less than around 10 cm. Each valve system comprises an inlet line 118A, 118B connected to their respective feed 114A, 114B, a respective outlet line 120A, 120B connected to the powder exit 112 and a respective bypass line 122A, 122B. As explained below, the valve systems 116A, 116B may be selectively activated to direct powder from their associated feeds 114A, 114B to the powder exit or to divert their powder feed away from the exit via the respective bypass lines 122A, 122B. The valves in the systems 116A, 116B may be bidirectional valves. The skilled person will appreciate that embodiments of the invention allow the powder feed(s) at the powder exit to be quickly turned on/off as desired by providing a valve system close to the powder exit. Embodiments of the invention may respond quickly to desired changes by diverting a substantially continuous powder feed away from the powder exit rather than attempting to stop and start the flow.

In use, the additive layer manufacturing system 100 is aligned with the required deposition point 110 on a substrate. The first and second valve systems 116A, 116B are opened and closed as desired in order to control the flow of the first and second powder feeds 114A, 114B from the first and second powder feed stocks to the powder exit 112 of the nozzle 108.

In Figure 1, it can be seen that the laser beam 106 is switched on and directed at the deposition point 110. The first valve system 116A is closed so that the first powder feed 114A is prevented from flowing onto the deposition point. The first powder feed is diverted and flows out of the bypass line 122A so that powder from the first feed flows back to the first feed stock. The second valve system 116B is open so that the second powder feed 114B flows through the outlet line 120B to the powder exit 112 at the tip of the nozzle 108 and onto the deposition point 110. The second powder feed 114B is heated by the laser beam 106 and melts. On cooling, the melted powder solidifies to form a fully dense solid layer of the first material 100.

In Figure 2, it can be seen that the laser beam 106 is on and directed at the deposition point 110. The first valve system 116A is open so that the first powder feed 114A flows through the outlet line 120A to the powder exit 112 at the tip of the nozzle 108 and onto the deposition point. The second valve system 116B is closed so that the second powder feed 114B is prevented from flowing onto the deposition point. The second powder feed is diverted and flows out of the bypass line 122B. The second powder feed flows back to the second feed stock. The first powder is heated by the laser beam and melts. On cooling, the melted powder solidifies to form a fully dense solid of second material.

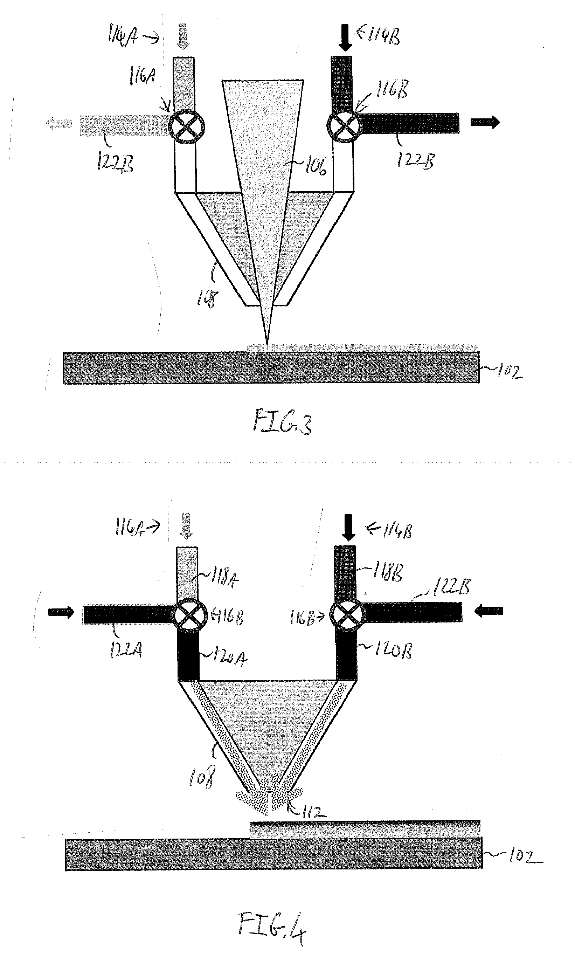

In Figure 3, it can be seen that the laser beam 106 is on and directed at the deposition point 110. The first valve system 116A is closed so that the first powder feed 114A is prevented from flowing onto the deposition point. The first powder feed is diverted and flows out of the bypass line 122A. The first powder feed flows back to the first feed stock. The second valve system 116B is also closed so that the second powder feed 114B is prevented from flowing onto the deposition point. The second powder feed is diverted and flows out of the bypass line 122B. The second powder feed flows back to the second feed stock. The laser beam enables heat treatment, forced cooling or other laser processes to be carried out at the deposition point without the powder. For forced cooling purposes, one of the delivery lines could deliver a cold gas with the laser turned off and the powder streams turned on.

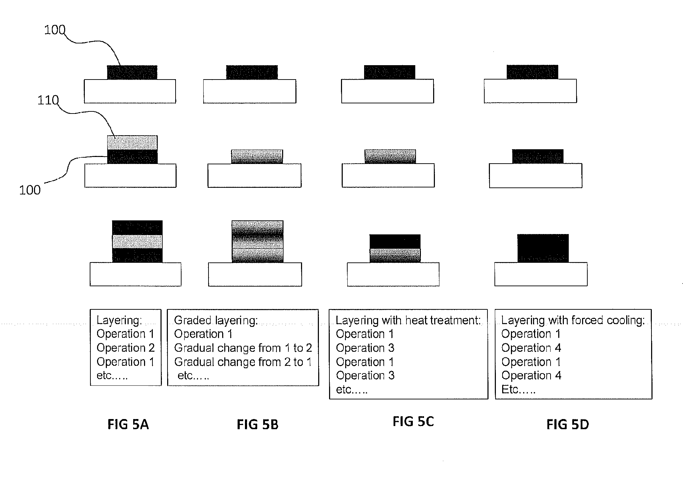

As explained below with reference to Figure 5, in some embodiments it may be desirable to provide a mix of the powder feeds 114A, 114B to the deposition point 110. Such a feed can be provided whilst the laser beam 106 is on and the first valve system 116A is open so that the first powder feed 114A flows through the outlet line 120A to the powder exit 112 at the tip of nozzle 108 and onto the deposition point. The second valve system 116B is also open so that the second powder feed 114B flows through the outlet line 120B to the powder exit at the tip of nozzle and onto the deposition point. It will be appreciated that the valve systems may be able to throttle or partially divert the flow from the feeds 114A, 114B. Such a valve arrangement can enable the ratio of powder feeds in the mix to be finely controlled.

A fluid (gas or liquid) stream can be used to provide thermal management, for example forced cooling, of the dynamically treated area. The fluid or gas may be provided via a separate outlet (not shown) on the nozzle. Alternatively, as shown in Figure 4 the fluid may be fed through the bypass lines 122A, 122B to the powder exit 112 of the nozzle 108. The skilled person will appreciate that such an arrangement would require the valve systems 116A, 116B to provide a further position in which the powder feed is stopped at the valve (i.e. it is neither directed at the powder exit or the bypass line).

Figure 5A illustrates the layering of two different materials using an embodiment of the invention. First, the configuration of Figure 1 is used to deposit a first layer of the first material 100. Then the second valve system 116B is switched to the closed position preventing the flow of the second powder. The first valve system is switched to the open position enabling the first powder to flow onto the deposition point 110 to deposit a layer of the second material. The process is then repeated between the configurations shown in Figures 1 and 2 to produce an alternating layered structure. As the valve systems 116A, 116B are so close to the deposition point the system allows efficient control of the flow of powder to provide precise, discrete layers of material as desired.

Figure 5B illustrates the gradual layering of materials using an embodiment of the invention. The graded layers may be produced by the first 116A and the second 116B valve systems being gradually opened/closed to produce a mixed feed with an increasing proportion of the second material as the layers are deposited. Alternatively, the graded layers could be produced by alternately opening and closing the first and second valve systems as each layer is deposited so that each graded layer comprises a stepped interlocked layer of the first and second materials.

Figure 5C illustrates the layering of different materials using an embodiment of the invention. The first valve system 116A is closed. The second valve system 116B is open, allowing a flow from the second powder feed 114B onto the deposition point 110. The laser beam 106 is on and directed at the deposition point. The laser beam melts the powder, causing a first layer of the first material 100 to form. As shown in Figure 3, the second valve system 116B is then closed. The first valve system remains closed. The laser beam remains on and enables heat treatment (or other laser processes) without the powder. The process is then repeated as desired, with the second valve system 116B then being re-opened to allow a further layer of the second material to be deposited onto the heat treated layer.

Figure 5D illustrates the layering of different materials using an embodiment of the invention. The first valve system 116A is closed. The second valve system 116B is open, allowing the flow of second powder feed 114B onto the deposition point 110 to produce a first layer of material. The laser beam 106 is on and directed at the deposition point 110. The laser beam melts the powder to form a first layer of material 100. As shown in Figure 4, the laser beam is then switched off. The second valve system 116B is then closed. The first valve system 116A remains closed. A fluid is then fed to the nozzle and directed at the deposition point. The deposited material undergoes forced cooling. The process can then be repeated as desired to produced a layered material.

The skilled person will appreciated from the above description that in embodiments of the invention the powder feed may only be dispensed from the system when the laser is on. This advantageously increases the powder utilisation. Furthermore, any powder wastage which occurs when moving the nozzle from one location to another may be significantly reduced due to the valve systems.

The ALM system described here may significantly reduce any stray powder. Due to the effects of stray powder, known ALM systems have to be used inside a close cell. The ALM system of embodiments of the invention can however be operated without a cell.

The skilled person in the art will appreciate that by utilising each powder exit in the nozzle to deliver a different powder feed, a dynamic and complex mix of materials/alloys may be deposited at the deposition point. For example, a first powder feed may provide a metal feed and a second powder feed may provide a feed of short fibres (for example, carbon fibres). By alternating the two feed sources (by switching the valve systems on the first and second nozzles on and off alternatively as required), a complex metal-fibre matrix can be produced. The laser power can be adjusted according to which powder feed has been deposited, therefore by using materials with different melt temperatures, different types of matrix can be fabricated.

The skilled person will also appreciate that further modifications may be made to the above embodiments without departing from the scope of the invention. For example, the additive layer manufacturing system may be provided with a further nozzle for depositing an adhesive layer to provide a bonding layer between dissimilar materials.

## Claims

1. An additive layer manufacturing system (100) comprising:
a powder delivery system (104) including at least one powder feed (114A) from a powder stock (115A) to a powder exit (112) adjacent a deposition point (110), the powder delivery system further comprising at least one valve system (116A) proximal to the powder exit for controlling flow of the at least one powder feed at the deposition point.

2. A system according to claim 1, further comprising a laser source (106) directed at the deposition point (110).

3. A system according to claim 1 or 2, wherein the powder delivery system further comprises a nozzle (108), and the nozzle comprises the at least one valve system (116A).

4. A system according to claim 3, when dependent upon claim 2, wherein the laser source (105) and the nozzle (108) are provided on an integrated deposition head.

5. A system according to any preceding claim, wherein the at least one valve system (116A) is configured to selectively divert its said powder feed (114A) away from the deposition point (110).

6. A system according to claim 5, wherein the valve system (116A) returns powder from the selectively diverted powder feed (114A) to the powder stock.

7. A system according to claim 5 or 6, wherein the valve system (116A) includes an inlet line (118A), an outlet line (120A) and a bypass line (122A), and is arranged to selectively connect the inlet line to either the outlet line or the bypass line.

8. A system according to any preceding claim, wherein the at least one powder feed (114A) comprises at least one material selected from metals, ceramics, powders and fibres or a mixture thereof.

9. A system according to any preceding claim, comprising a plurality of powder delivery systems, each said powder delivery system including a valve system (116A, 116B) proximal to the powder exit (112) for controlling the flow of powder feed at the deposition point (110) and a powder feed (114A, 114B), wherein each said powder feed feeds a different powder material.

10. A method of preparing a layered structure, the method including:
using a powder delivery system (104) to feed powder from at least one powder feed (114A) from a powder stock to a powder exit (112) adjacent a deposition point (110), and
using at least one valve system (116A) proximal to the powder exit for controlling flow of the at least one powder feed at the deposition point.

11. A method according to claim 11, further including:
directing a laser beam (106) at the deposition point (110);
depositing a said powder from the powder exit (112) onto the deposition point such that the powder is heated by the laser beam, and
selectively activating the at least one valve system (116A) so as to divert the flow of powder away from the powder exit.

12. A method according to claim 10 or 11, wherein the powder delivery system (104) comprises a plurality of said valve systems (114A, 116B), and in which the method further includes selectively activating the valve systems to alternate or mix different materials.

13. A method according to claims 11 or 12, further including selectively activating a said valve system (116A, 116B) such that no powder exits at the deposition point (110) while activating the laser beam (106) to apply a heat treatment or laser process to material at the deposition point.

14. A method according to any one of claims 11 to 13, further comprising providing a fluid delivery system, and further comprising selectively activating the at least one said valve system (116A) such that no powder exits at the deposition point, while deactivating the laser beam (106), and activating the fluid delivery system to provide thermal management (including forced cooling) of material at the deposition point (110).

15. An Additive Layer Manufacturing deposition head including an arrangement for receiving at least one powder feed (114A) from a powder stock and at least one valve system (116A) arranged, in use, proximal to a powder exit adjacent a deposition point (110) for controlling flow of the at least one powder feed at the deposition point.
